# EUROPÄISCHE PATENTSCHRIFT

(11) **EP 0 607 856 B1**
(45) Veröffentlichungstag und Bekanntmachung des Hinweises auf die Patenterteilung: **04.11.1998**
(21) Anmeldenummer: 94100362.6
(22) Anmeldetag: 12.01.1994
(51) Int. Cl.: G02C 7/16, G02C 7/00

(54) **Sehhilfe bei Netzhautablösungen mit Beteiligung der Macula**
Visual aid for macular degeneration
Système d'amélioration de la vision pour dégénération rétinienne centrale

(30) Priorität: 14.01.1993 DE 4300742
(43) Veröffentlichungstag der Anmeldung: 27.07.1994
(73) Patentinhaber: Lesko, Klaus Dieter, 25569 Kremperheide (DE)
(72) Erfinder: Lesko, Klaus Dieter, 25569 Kremperheide (DE)
(74) Vertreter: Siewers, Gescha, Dr.

(56) Entgegenhaltungen:
- EP-A- 0 335 731
- CH-A- 461 836
- DE-A- 3 202 000
- FR-A- 2 209 114
- US-A- 3 876 294
- US-A- 3 967 885
- US-A- 4 772 113
- US-A- 5 060 062

## Beschreibung

Die Erfindung betrifft Brillen, Kontaktlinsen und implantierbare Linsen als Sehhilfe bei Erkrankungen der Netzhaut, insbesondere bei Netzhautablösungen mit Beteiligung der Macula.

Netzhautablösungen können entweder idiopathisch bei entsprechender Disposition des Patienten sein, wie beispielsweise Kurzsichtigkeit oder fortgeschrittenes Alter, sowie durch Abhebung der Netzhaut durch Eindringen verflüssigten Glaskörpers zwischen Stäbchen- bzw. Zapfenschicht und Pigmentepithelschicht der Netzhaut entstehen. Außerdem gibt es die sogenannte sekundäre Netzhautablösung ohne Einriß der Netzhaut in Folge Zuges von innen, beispielsweise bei Glaskörperschrumpfung oder Druck von hinten durch pathologische Prozesse zwischen Retina und Choroidea. Als Macula lutea wird der gelbe Fleck der Netzhaut des Auges bezeichnet, der die Fovea der Retina enthält. Von Maculadegeneration wird gesprochen, wenn in Folge von familiärer Disposition oder Netzhauterkrankungen, insbesondere Netzhautablösung, eine fortschreitende Zerstörung der Macula lutea auftritt, die durch zunehmende Sehstörungen und später Verlust des zentralen Sehvermögens bei Erhaltung des peripheren Gesichtsfeldes gekennzeichnet ist.

Die heute übliche Therapie bei Netzhautablösungen ist im wesentlichen mikrochirurgisch und besteht aus einer Annäherung von Netz- und Aderhaut und einer darauf folgenden Induktion einer Entzündungsreaktion durch Kälte-Hitze- oder Lichtkoagulation zwecks Verklebung des Risses und Wiederanlegen der Netzhaut an die Choroidea. Zur Lichtkoagulation werden heute in der Regel Laser eingesetzt, so daß man auch vom Laserverschweißen der Netzhaut spricht.

Bei bereits eingetretener Zerstörung oder bei Beeinträchtigung der Macula lutea läßt sich aber auch durch Laserverschweißung die bereits vorhandene Beeinträchtigung des Sehvermögens nicht rückgängig machen, so daß bei derartigen Patienten nur eine unscharfe Abbildung der Umwelt möglich ist, wobei noch hinzukommt, daß infolge der Maculadegeneration gerade Linien nicht mehr als solche abgebildet werden können, da die Möglichkeit einer hohen Auflösung nicht mehr gegeben ist.

Da die beiden Augen an verschiedenen Stellen im Raum gelegen sind, entstehen in ihnen auch zwei unterschiedliche Netzhautbilder, die im Gehirn zu einem räumlichen Eindruck verrechnet werden. Diese räumliche Tiefenwahrnehmung ist recht genau, weil alle, auch die kleinsten Augenbewegungen und Akkomodationsprozesse auf das strengste korreliert zwischen beiden Augen stattfinden, und weil die nervösen Einheiten im visuellen Gehirn eng miteinander gekoppelt sind. Wenn bei beiden Augen Veränderungen an der Macula stattfinden, ist daher diese räumliche Tiefenwahrnehmung nicht mehr möglich, so daß der Patient statt eines Gegenstandes im Raum häufig nur noch eine verzerrte Abbildung des Gegenstandes und von diesem räumlich versetzt dessen Schattenbild erkennen kann.

Patienten, die unter Netzhautdefekten mit einer Beteiligung der Macula leiden, sind daher nicht mehr in der Lage, Druckschriften mit der üblichen Größenordnung der Schrifttypen zu lesen oder Bilder im Fernsehen zu erkennen, selbst "Riesenschlagzeilen" sind für diese Patienten nicht mehr entzifferbar. Sie benötigen daher zur Wiedergabe von druckschriftlichen Informationen Hilfsmittel, die beispielsweise eine Schrift in normaler Größe auf das 15- bis 20-fache vergrößern und auf einen Fernsehbildschirm übertragen. Die so vorbereiteten Informationen werden aber von den Patienten nur mühsam wahrgenommen, da, wie bereits ausgeführt, gerade Linien bei Buchstaben verzerrt wiedergegeben werden und daher ein Lesen unter diesen Bedingungen sehr anstrengend und ermüdend ist.

Völlig überraschend wurde jetzt festgestellt, daß es möglich ist, Sehhilfen bei den oben geschilderten Erkrankungen zu entwickeln, die es ermöglichen, daß die Vergrößerung von druckschriftlichen Wiedergaben stark reduziert werden kann und die dem Patienten erlauben, seine Umgebung wieder mit unverzerrten Linien und ohne "Stereobilder" wahrzunehmen.

Beispielsweise aus der DE 32 02 000 A1 ist ein optisches Raster zur Korrektur optischer Fehler natürlicher oder künstlicher Linsen bekannt, das zwei rechtwinklig zueinander angeordnete Serien dunkler und lichtundurchlässiger Balken aufweist, die integral so miteinander verbunden sind, daß sie ein integrales Netzwerk bilden. Dabei haben alle Balken einen dreieckigen Querschnitt, wobei die Basis des Dreiecks der Linse zugewandt ist, während der Scheitel von der Linse wegweist. Solche Balkenraster aus dreieckigen Balken sind als Sehhilfen bei den oben geschilderten Erkrankungen jedoch nicht einsetzbar, da durch die Balkenbreite viel Licht verloren geht. Die lichtdurchlässigen Bereiche des Rasters sind sehr klein. Um mehr Helligkeit zu schaffen, ist das Raster gemäß der in der DE 32 02 000 Al außen mit einem spiegelartigen flektierenden Überzug beschichtet.

Sowohl die Herstellung dieses speziell geformten Rasters, als auch die Kompensation der hohen Lichtverluste ist aufwendig und teuer.

Darüber hinaus ist aus der US 3,967,885 eine Brille bekannt, die aus einer undurchsichtigen Maske mit einem Gitter aus transparenten Öffnungen besteht. Diese Brille dient zum postoperativen Schutz des Auges gegen hohen Lichteinfall und zur Verbesserung der Abbildungs- und Fokossierungsleistung des Auges. Zur täglichen Anwendung bei den oben beschriebenen Erkrankungen ist diese Brille nicht geeignet, da wiederum nur ein sehr geringer Anteil des einfallenden Lichtes an das Auge weitergeleitet wird.

Weiter ist aus der EP 0 335 731 A2 eine diffraktive Linse bekannt, die konzentrische Ringe aufweist, deren Breite sich von Ring zu Ring ändert.

Es ist Aufgabe der vorliegenden Erfindung, eine Sehhilfe für Patienten mit Netzhautablösungen mit Beteiligung der Macula zur Verfügung zu stellen, die dem Patienten erlaubt, seine Umgebung wieder mit unverzerrten Linien und ohne "Stereobilder" wahrzunehmen. Die Sehhilfe soll im Alltag anwendbar sein und das Sehvermögen nicht in anderer Art, wie beispielsweise durch hohen Lichtverlust, beeinträchtigen. Außerdem soll die Sehhilfe einfach und kostengünstig herstellbar sein.

Erfindungsgemäß wird daher eine Brille, eine Kontaktlinse oder implantierbare Linse als Sehhilfe bei Netzhautablösung mit Beteiligung der Macula vorgeschlagen, die dadurch gekennzeichnet ist, daß darauf eine Kreuzlinienrasterung aufgebracht ist. Bei der Kontaktlinse und der implantierbaren Linse sollte die Kreuzlinienrasterung eine Seitenlänge von unter 0,5 mm, insbesondere zwischen 0,5 und 0,05 mm betragen.

Alternativ kann auf der Brille, der Kontaktlinse oder der implantierbaren Linse auch eine Punktrasterung aufgebracht sein, wobei der Durchmesser der Punkte unter etwa 0,01 mm und der Abstand benachbarter Punkte etwa 0,5 mm betragen sollte.

Wenn Patienten mit den oben geschilderten Sehstörungen Gläser, die als Linse ausgebildet sein können oder nicht, mit einer normalen Kreuzlinienrasterung mit einer Seitenlänge von unter 0,5 mm, meist zwischen 0,5 und 0,05 mm, wie eine normale Lesebrille benutzen, ergibt sich ein optischer Eindruck, der keine Verzerrung gerader Linien und keine "Stereobilder" mehr beinhaltet, sondern eine klare Darstellung des Gegenstandes im Raum mit geraden Linien wiedergibt, wobei allerdings die Bildwahrnehmung durch den Patienten in etwa der Betrachtung einer fotografischen Aufnahme unter Verwendung eines Teleobjektivs durch einen Gitterzaun entspricht, d.h. also, daß die Kreuzlinienrasterung zwar als subjektiver Vordergrund stark verschwommen erkennbar bleibt, daß aber die dahinterliegende Abbildung völlig klar und konturengerecht ist. Eine in jeder Beziehung zufriedenstellende wissenschaftliche Erklärung hierfür kann noch nicht gegeben werden, aber es wird angenommen, daß die Entzerrung der Wahrnehmung mit einer bildpunktförmigen Verarbeitung der optischen Information zusammenhängt, da die Rasterung etwa in der Größenordnung der Auflösungsfähigkeit des menschlichen Auges von getrennten Einzelbildern liegt.

Eine konturengerechte Abbildung bei Netzhautpatienten kann auch dann erzielt werden, wenn die Gläser nicht mit einem Kreuzlinienraster, sondern mit einem Punktraster versehen sind. Für den Patienten ergibt sich subjektiv eine ähnliche Lage bei der Kreuzlinienrasterung, nämlich die Rasterung bleibt als subjektiver Vordergrund stark verschwommen gerade eben noch erkennbar, aber die dahinterliegende Abbildung ist völlig klar und konturengerecht und erlaubt dem Patienten, seine Umgebung wieder mit unverzerrten Linien und ohne "Stereobilder" wahrzunehmen.

Bei Verwendung einer Punktrasterung sollte der Durchmesser der gravierten Punkte etwa 0,01 mm und der Seitenabstand etwa 0,05 mm betragen.

Die erfindungsgemäße Sehhilfe kann als übliche Brille auch in modischen Formen ausgebildet sein, bei denen die Rasterung in an sich bekannter Weise durch das Verkleben von zwei entsprechend vorbehandelten Glasscheiben mit Hilfe von beispielsweise Kanada-Balsam hergestellt wird. Je nach Art der Erkrankung kann eine solche Brille entsprechend nur für ein oder beide Augen ausgerüstet sein. Desgleichen sind entsprechend vorbereitete Gläser auch als Sichtschirm oder als Monokel verwendbar.

Anstelle von Brillengläsern aus Glas mit einem Glasgravurraster können auch Kunststoffgläser Verwendung finden, die entweder entsprechend dem anorganischen Glas graviert werden oder bei denen die Rasterung durch Einlage eines entsprechenden feinen Metallrasters aus beispielsweise Aluminium zwischen zwei Kunststoffschichten erzeugt wird.

Die aus anorganischem Glas oder Kunststoff bestehenden Brillengläser können in üblicher Weise und, falls für den Patienten erforderlich, als Linsen geschliffen werden, um eine etwa neben den Netzhautstörungen bestehende Kurz- oder Weitsichtigkeit zu beheben.

Alle obigen Ausführungen treffen auch auf Kontaktlinsen und implantierbare prothetische Linsen zu, die erfindungsgemäß ebenfalls als Sehhilfe bei Netzhautablösungen unter Beteiligung der Macula eingesetzt werden können.

Die erfindungsgemäßen weichen oder harten Kontaktlinsen oder implantierbaren Linsen können aus anorganischem Glas oder vorzugsweise aus physiologisch unbedenklichen Kunststoffen bestehen. Kontaktlinsen aus Kunststoffen sind an sich bekannt und werden seit Jahrzehnten verwendet, so daß es dem Fachmann keine Schwierigkeiten bereitet, geeignete Kunststofflinsen für den jeweiligen Patienten aus dem vorhandenen Angebot auszuwählen. Die Kreuzlinienrasterung kann ebenfalls in an sich bekannter Weise durch Gravieren, Schneiden oder Fräsen, insbesondere mit Hilfe von Laserstrahlen, durchgeführt werden. Falls der Patient zusätzlich Sehkorrekturen benötigt, können die Linsen weiterhin auch entsprechend und in an sich bekannter Weise geschliffen werden.

## Patentansprüche

1. Brille als Sehhilfe bei Netzhautablösung mit Beteiligung der Macula, dadurch gekennzeichnet, daß auf die Brillengläser eine Kreuzlinienrasterung aufgebracht ist, deren Seitenlänge unter 0,5 mm, insbesondere zwischen 0,5 und 0,05 mm, beträgt.

2. Brille als Sehhilfe bei Netzhautablösung mit Beteiligung der Macula, dadurch gekennzeichnet, daß auf die Brillengläser eine Punktrasterung aufgebracht ist, wobei der Durchmesser der Punkte unter etwa 0,01 mm und der Abstand benachbarter Punkte etwa 0,05 mm beträgt.

3. Kontaktlinse als Sehhilfe bei Netzhautablösung mit Beteiligung der Macula, dadurch gekennzeichnet, daß auf die Kontaktlinse eine Kreuzlinienrasterung aufgebracht ist.

4. Kontaktlinse nach Anspruch 3, dadurch gekennzeichnet, daß die Seitenlänge der Kreuzlinienrasterung unter 0,5 mm, insbesondere zwischen 0,5 und 0,05 mm, beträgt.

5. Kontaktlinse als Sehhilfe bei Netzhautablösung mit Beteiligung der Macula, dadurch gekennzeichnet, daß auf die Kontaktlinse eine Punktrasterung aufgebracht ist, wobei der Durchmesser der Punkte etwa unter 0,01 mm und der Abstand benachbarter Punkte etwa 0,05 mm beträgt.

6. Implantierbare Linse als Sehhilfe bei Netzhautablösung mit Beteiligung der Macula, dadurch gekennzeichnet, daß auf die Linse eine Kreuzlinienrasterung aufgebracht ist.

7. Implantierbare Linse nach Anspruch 6, dadurch gekennzeichnet, daß die Seitenlänge der Kreuzlinienrasterung unter 0,5 mm, insbesondere zwischen 0,5 und 0,05 mm, beträgt.

8. Implantierbare Linse als Sehhilfe bei Netzhautablösung mit Beteiligung der Macula, dadurch gekennzeichnet, daß auf die Linse eine Punktrasterung aufgebracht ist, wobei der Durchmesser der Punkte etwa unter 0,01 mm und der Abstand benachbarter Punkte etwa 0,05 mm beträgt.

9. Brille, Kontaktlinse oder implantierbare Linse nach einem der Ansprüche 1 bis 8, dadurch gekennzeichnet, daß die Rasterung durch Gravieren, Lasergravieren, Schneiden oder Fräsen in Glas oder Kunststoff hergestellt ist.

10. Brille, Kontaktlinse oder implantierbare Linse nach einem der Ansprüche 1 bis 9, gekennzeichnet durch die Einlage eines entsprechenden Metallrasters in Kunststoff.

## Claims

1. A pair of spectacles as an aid to vision in the case of detachment of the retina with involvement of the macula, characterised in that a cross-line grid is applied to the spectacle lenses, the lateral length of this cross-line grid being less than 0.5 mm, in particular between 0.5 and 0.05 mm.

2. A pair of spectacles as an aid to vision in the case of detachment of the retina with involvement of the macula, characterised in that a point grid is applied to the spectacle lenses, the diameter of the points being less than approximately 0.01 mm and the distance between adjacent points being approximately 0.05 mm.

3. A contact lens as an aid to vision in the case of detachment of the retina with involvement of the macula, characterised in that a cross-line grid is applied to the contact lens.

4. A contact lens in accordance with Claim 3, characterised in that the lateral length of the cross-line grid is less than 0.5 mm, in particular between 0.5 and 0.05 mm.

5. A contact lens as an aid to vision in the case of detachment of the retina with involvement of the macula, characterised in that a point grid is applied to the contact lens, the diameter of the points being less than approximately 0.01 mm and the distance between adjacent points being approximately 0.05 mm.

6. An implantable lens as an aid to vision in the case of detachment of the retina with involvement of the macula, characterised in that a cross-line grid is applied to the lens.

7. An implantable lens in accordance with Claim 6, characterised in that the lateral length of the cross-line grid is less than 0.5 mm, in particular between 0.5 and 0.05 mm.

8. An implantable lens as an aid to vision in the case of detachment of the retina with involvement of the macula, characterised in that a point grid is applied to the lens, the diameter of the points being approximately less than 0.01 mm and the distance between adjacent points being approximately 0.05 mm.

9. A pair of spectacles, a contact lens or an implantable lens in accordance with any one of Claims 1 to 8, characterised in that the grid is produced through engraving, laser engraving, cutting or milling in glass or plastics material.

10. A pair of spectacles, a contact lens or an implantable lens in accordance with any one of Claims 1 to 9, characterised by the insertion of an appropriate metal grid in plastics material.

## Revendications

1. Lunettes, en tant qu'aide à la vue dans des cas de décollement de la rétine impliquant la macula, caractérisées par le fait qu'un réseau de lignes croisées avec une longueur de côté inférieure à 0,5 mm, notamment comprise entre 0,5 et 0,05 mm, est appliqué sur les verres de lunettes.

2. Lunettes, en tant qu'aide à la vue dans des cas de décollement de la rétine impliquant la macula, caractérisées par le fait qu'un réseau de points avec un diamètre de point inférieur à environ 0,01 mm et un espacement entre points consécutifs d'environ 0,05 mm est appliqué sur les verres de lunettes.

3. Lentille de contact, en tant qu'aide à la vue dans des cas de décollement de la rétine impliquant la macula, caractérisée par le fait qu'un réseau de lignes croisées est appliqué sur la lentille de contact.

4. Lentille de contact selon la revendication 3, caractérisée par le fait que la longueur de côté du réseau de lignes croisées est inférieure à 0,5 mm, notamment est comprise entre 0,5 et 0,05 mm.

5. Lentille de contact, en tant qu'aide à la vue dans des cas de décollement de la rétine impliquant la macula, caractérisée par le fait qu'un réseau de points avec un diamètre de point inférieur à environ 0,01 mm et un espacement entre points consécutifs d'environ 0,05 mm est appliqué sur la lentille de contact.

6. Lentille implantable, en tant qu'aide à la vue dans des cas de décollement de la rétine impliquant la macula, caractérisée par le fait qu'un réseau de lignes croisées est appliqué sur la lentille.

7. Lentille de contact selon la revendication 6, caractérisée par le fait que la longueur de côté du réseau de lignes croisées est inférieure à 0,5 mm, notamment est comprise entre 0,5 et 0,05 mm.

8. Lentille implantable, en tant qu'aide à la vue dans des cas de décollement de la rétine impliquant la macula, caractérisée par le fait qu'un réseau de points avec un diamètre de point inférieur à environ 0,01 mm et un espacement entre points consécutifs d'environ 0,05 mm est appliqué sur la lentille.

9. Lunettes, lentille de contact ou lentille implantable selon une des revendications 1 à 8, caractérisées par le fait que le réseau est réalisé par gravure, gravure laser, taillage ou fraisage dans du verre ou dans une matière plastique.

10. Lunettes, lentille de contact ou lentille implantable selon une des revendications 1 à 9, caractérisées par l'insertion d'un réseau métallique adapté dans la matière plastique.
